**Europäisches Patentamt**

**European Patent Office**

**Office européen des brevets**

(19)

(11) Publication number : **0 498 660 A1**

## (12) EUROPEAN PATENT APPLICATION

(21) Application number : **92301039.1**

(22) Date of filing : **07.02.92**

(51) Int. Cl.⁵ : **G08B 5/22**

(30) Priority : **08.02.91 JP 39333/91**

(43) Date of publication of application :
**12.08.92 Bulletin 92/33**

(84) Designated Contracting States :
**CH DE ES GB LI NL**

(71) Applicant : **NEC CORPORATION**
**7-1, Shiba 5-chome Minato-ku**
**Tokyo 108-01 (JP)**

(72) Inventor : **Ide, Motoki, c/o NEC Corporation**
**7-1, Shiba 5-chome, Minato-ku**
**Tokyo (JP)**

(74) Representative : **Orchard, Oliver John**
**JOHN ORCHARD & CO. Staple Inn Buildings**
**North High Holborn**
**London WC1V 7PZ (GB)**

(54) **Pager receiver with message display function.**

(57)   A pager receiver of the present invention using a microprocessor (14) for control receives messages corresponding to a plurality of ID numbers set to it and stores the received messages in the message memory area (40,60) for each call distinction code indicating the destination ID number of the received message. The message memory area (40,60) is provided with a storage area (41-1,41-2,...,41-N) of fixed length for each call distinction code, for example, and each area stores one message. In this case, received messages are sorted by call distinction codes before being stored. Messages are read out of the message memory areas (40,60) in ascending or descending order of call distinction codes and displayed on the LCD. Alternatively, the message memory area (60) may be variable in length. Such a memory area comprises a directory (61) to store the call distinction code and sectors (62) to store messages and the messages are sorted before being stored using the call distinction code as a key.

**FIG.1**

EP 0 498 660 A1

The present invention relates to a pager receiver capable of displaying messages it receives, and particularly relates to a pager receiver characterized by its message display function.

## DESCRIPTION OF THE PRIOR ART

Conventional pager receivers of this kind are individually assigned one or more ID(identification) number for being called. When called, they receive transmitted messages and, at the same time, beep to notify the user of the call. An example of such conventional pager receivers is described in USP No. 4758834.

Such pager receivers store the massages received upon calls in their memory in the order of receipt so that the user can have the stored messages read out of the memory and displayed on the screen of the receiver. Some pager receivers with a plurality of ID numbers are capable of displaying a call distinction code together with a message so as to indicate the destination ID number of the message. This enables the user to distinguish the messages for different ID numbers.

For conventional pager receivers as described above, messages are read out of the memory for display in the order of receipt or reverse to it only. Even when the message is accompanied with the call distinction code, they are displayed in the order of receipt regardless of the call distinction code.

Recently, information services using pager receivers are becoming quite popular, and a pager receiver tends to be variously used. For example, a single pager receiver may be used for receiving various information services with assigning one of its ID numbers to stock price information and another to foreign exchange rate information. However, as described above, a conventional pager receiver just reads out the messages in the order of receipt or in reverse order, regardless of the call distinction code. This results in that messages for a ID number are mixed with messages for another ID number when read out and displayed, and the user has difficulty in checking and understanding the messages from information services and in utilizing them effectively. This problem becomes more distinctive with the increase of received messages.

## SUMMARY OF THE INVENTION

The object of this invention is to provide a pager receiver provided with message display function which enables easily understandable display of a plurality of messages received by a plurality of ID numbers and thereby realizes effective utilization of information services.

A pager receiver according to a preferred embodiment of this invention to achieve this object comprises a message receiving means to receive messages corresponding to a plurality of ID numbers set at the receiver, a storage means having a plurality of message storage areas to store received messages for different call distinction codes indicating the destination ID number of the received message, a storage processing means to sort the received messages by the call distinction code and store them to the above storage means, a reading means to read out the messages stored in the storage means in the ascending or descending order of call distinction codes and a display means to display the message read out from the storage means.

According to a preferred embodiment, the message storage area of the storage means comprises an area of fixed length and the storage processing means determines the initial address of the message storage area in the storage means corresponding to the call distinction code and stores the message from the initial address of this message storage area.

According to a further preferred embodiment, each call distinction code has one message storage area of the storage means so that an area stores a message. When no message is received for a call distinction code, the storage processing means stores an end code in the message storage area of the storage means corresponding to that call distinction code.

According to a still further preferred embodiment, the pager receiver is provided with switches to read out the messages in ascending and descending orders of call distinction codes using the reading means above.

In a pager receiver according to another preferred embodiment of this invention, a message storage area of the storage means comprises an area of variable length provided with a directory to store a call distinction code for each message and one or more sectors to store the message corresponding to the applicable call distinction code. The storage processing means stores the call distinction code of the received message in the above directory, stores the message to the above sector(s) and sorts the messages by the call distinction code in the directory.

The directory of the message storage area is provided with a pointer to indicate the directory corresponding to the next message and the sector has a pointer to indicate the following sector.

Other objects and effects of the present invention will be clarified in the detailed description below.

## BRIEF DESCRIPTION OF THE DRAWINGS

Fig. 1 is a block diagram showing the structure of an entire pager receiver according to an embodiment of the present invention;

Fig. 2 is an appearance view of a pager receiver according to an embodiment.

Fig. 3 is a flowchart to show the signal receiving operation of the pager receiver according to this invention.

Fig. 4 is a time chart to show the operation timing at the decoder and microprocessor of the pager receiver according to this invention.

Fig. 5 is a diagram to show a format example of the call signal used for calling the pager receiver according to the present invention.

Fig. 6 is a diagram to show the configuration with message memory areas of fixed length.

Fig. 7 is a diagram to show the configuration of the buffer for temporarily storing received messages.

Fig. 8 is a flowchart to show the processing to store a message in the message memory area for the configuration shown in Fig. 6.

Fig. 9 is a flowchart to show the processing to read out the message stored as shown in Fig. 8 for display.

Fig. 10 is an appearance view to show how a message processed as shown in Fig. 9 is displayed.

Fig. 11A is a diagram to show the configuration with message memory areas of variable length.

Fig. 11B is a diagram to show the configuration of sectors given in Fig. 11A.

Figs. 12A, 12B and 12C are a flowchart to show the processing to store a message in the message memory area with the configuration shown in Fig. 11A.

Fig. 13 is a flowchart to show the processing to read and display the message stored in Fig. 12.

Fig. 14 is an appearance view to show how the message processed as shown in Fig. 13 is displayed.

DESCRIPTION OF THE PREFERRED EMBODIMENT

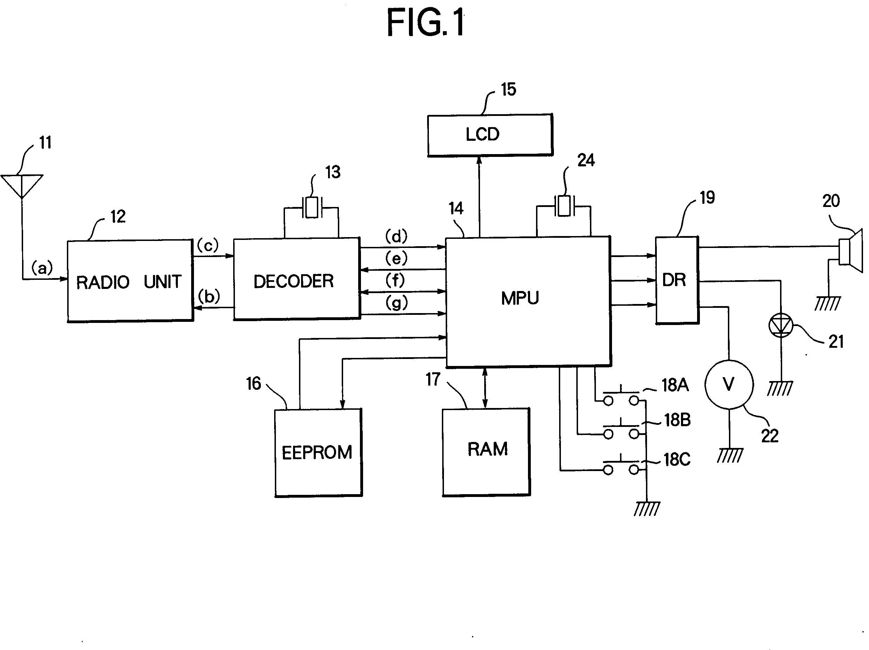

A preferred embodiment of the present invention is described below referring to Figs. 1 to 6.

Fig. 1 is a block diagram to show the configuration of a pager receiver according to a first embodiment of this invention. In Fig. 1, the pager receiver of this invention is provided with an antenna 11 to receive modulated call signals, a radio unit 12 to demodulate received signals, a decoder 13 to decode received signals, a microprocessor unit (MPU) 14 to control the operation of the pager receiver, a liquid crystal display (LCD) 15 for digital display of received messages, an electrically erasable programmable read only memory (EEPROM) 16 to store call signal, a random access memory (RAM) 17 to store received messages, function switches 18A, 18B and 18C, a driver 19, a speaker 20, a light emitting diode (LED) 21 and a vibrator 22. The reference numeral 23 refers to a clock pulse generator for the decoder 13 and 24 refers to an operation clock pulse generator for the MPU 14.

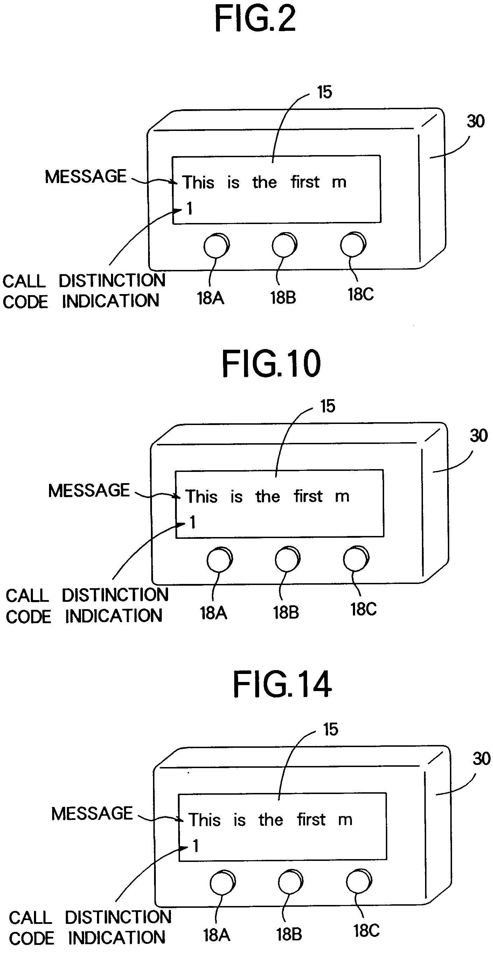

Fig. 2 shows the appearance of this pager receiver provided with the LCD 15 for digital display of messages on the surface of a case 30 and with the function switches 18A, 18B and 18C.

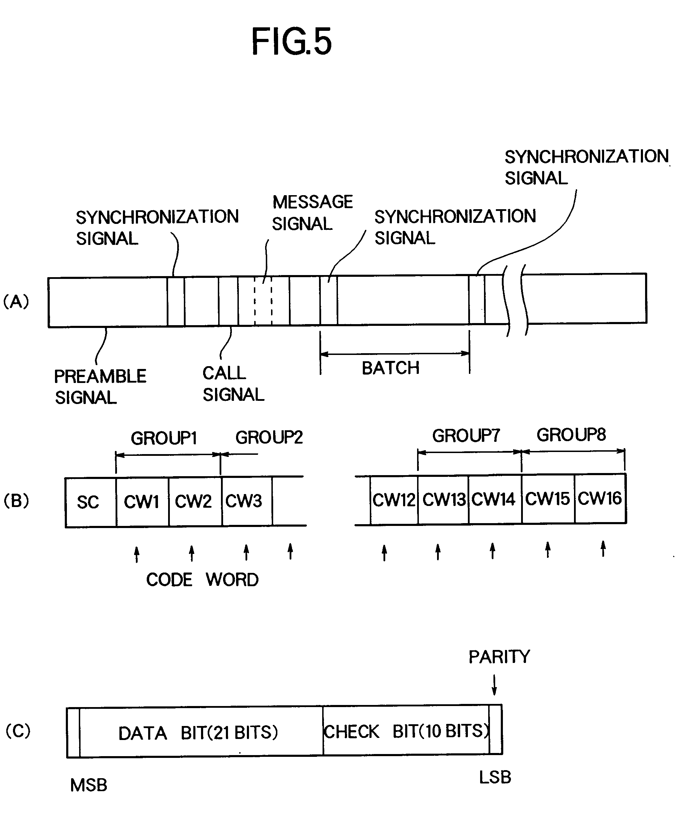

Now referring to Figs. 5(A), 5(B) and 5(C), an example of POCSAG, the basic format of signals used for calling of a pager receiver is described. Fig. 5 (A) shows the configuration of the entire format comprising the preamble signal, synchronization signal (SC), call signal and message signal. The preamble signal has 576 bits consisting of repeated pairs of 1 and 0. The synchronization signal has 32 bits and serves for synchronization with the code words (CW). The call signal is the ID number peculiar to the pager receiver expressed in BCH code (Bose-Chaudhuri-Hocquenghem Code). The message signal is the transmitted message expressed in BCH code. A series of signals which begins with a synchronization signal and ends immediately before the subsequent synchronization signal is called a batch. The batch comprises a plurality of code words (CW) constituting the call signal and message signal as shown in Fig. 5 (B). Two code words (CW) are paired to form a group. As shown in Fig. 5 (C), a code word (CW) consists of 21 data bits and 10 check bits and the least significant bit (LSB) serves as the parity bit. The most significant bit (MSB) is 0 for the call signal and 1 for the message signal.

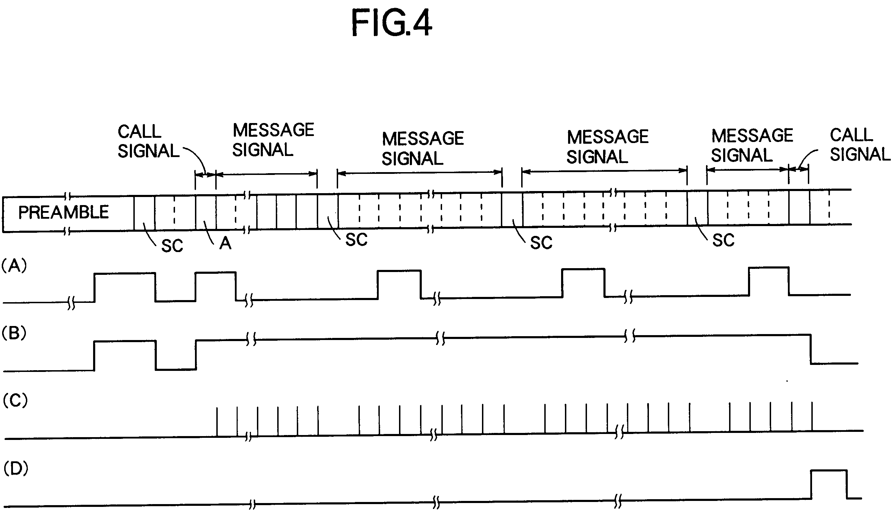

The modulated call signal (a) received by the antenna 11 is demodulated by the radio unit 12 and output as demodulated signal (c). The radio unit 12 receives signals intermittently according to the battery saving control signal (b) from the decoder 13. Figs. 4(A) and 4(B) show timings of battery saving control signal (b) from the decoder 13. Fig. 4 (A) shows the timing where the call signal for the pager receiver is not received during receiving of POCSAG signals and Fig. 4 (B) shows the timing where the call signal A for the pager receiver is received.

To the EEPROM 16, ID numbers for the pager receiver are set. The pager receiver of this embodiment can be set for a plurality of ID numbers (N numbers) and the received message for any of the ID numbers is displayed.

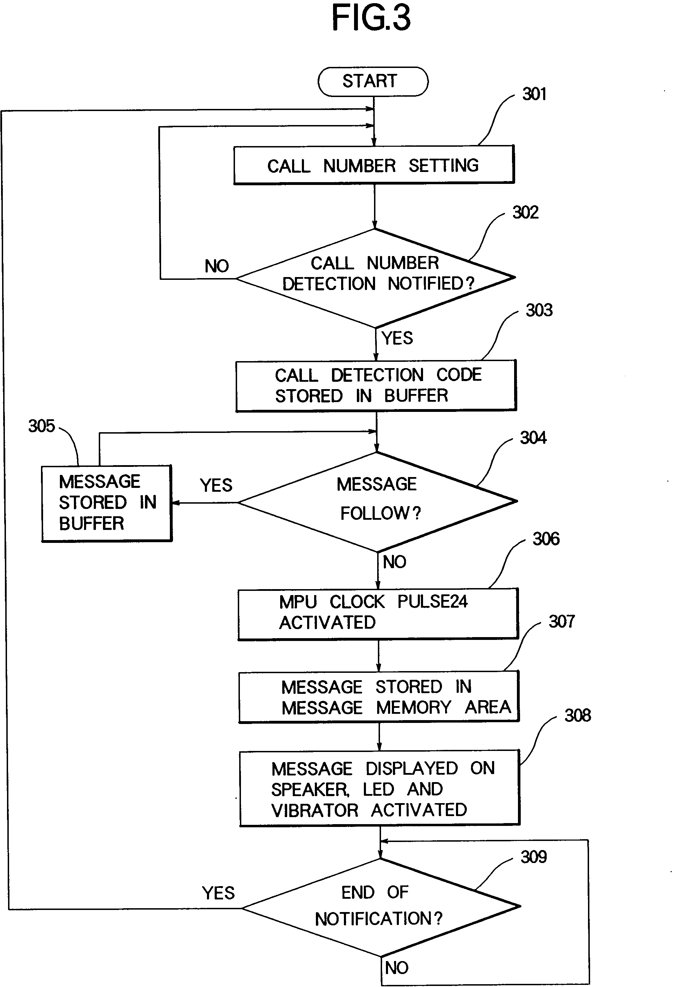

The signal reception by the MPU 14 is now described referring to the flowchart of Fig. 3 and the timing chart of Fig. 4.

The MPU 14 reads out a plurality of ID numbers set at the EEPROM 16 and sets them to the decoder 13 using the address bus (e) and data bus (f) (Step 301). ID numbers are here designated as 1, 2 ....and N (natural numbers).

The decoder 13 collates the ID numbers for the receiver and the demodulated signal (c) demodulated by the radio unit 12. If the latter is identical to one of the ID numbers, together with notification of ID number detection, a call distinction code 1, 2 ... or N is output to the MPU 14 to indicate to which ID number the demodulated signal is identical. This ID number detection notice and call distinction code are output via MPU interface of the interruption signal (d), address bus (e) and data bus (f). After that, errors in the data sent following the ID number are corrected and the data bits only are transmitted to the MPU 14 via MPU interface code word by code word.

The MPU 14 judges whether the ID number detection is notified from the decoder 13 (Step 302). Upon receiving the ID number detection notice, the MPU 14 stores the call distinction code from the decoder 13 to the buffer area of its internal memory or an external RAM 17 (Step 303).

If the MPU 14 subsequently receives data from the decoder 13 following the above, it judges whether the data is message or ID number (Step 304). When the data is a message, the MPU 14 stores it to the buffer area of its internal memory or an external RAM 17 (Step 305). The MPU 14 uses the reference clock pulse (g) generated by the clock pulse generator 23 as the operation clock pulse for this procedure. Fig. 4 (C) shows the timing of the reference clock pulse (g). Messages are stored in the buffer according to this timing. When the data is a ID number in Step 304, the MPU 14 stops receiving data at that time and activates the MPU operation clock pulse generator 24 (Step 306).

The MPU 14 moves the data stored in the buffer to the message memory area of an external RAM 17 as a message (text data) (Step 307). Fig. 4 (D) shows the timing of the MPU operation clock pulse generator 24 at this step. High level in the time chart represents oscillation of the MPU operation clock pulse generator 24. The MPU 14 processes data in the buffer according to this timing and stores it in the message memory area. If any messages for other call distinction code are already stored, the messages are sorted by call distinction codes. The storage processing of messages in message memory areas will be described in detail later.

After completed message signal reception, the MPU 14 via the driver 19 drives the speaker 20, LED 21 and vibrator 22 to notify the user that a call is received. At the same time, it reads out the stored message from the message memory area and displays the message text on the LCD 15 (Step 308). Reading from message memory areas will be described in detail later.

Then, the MPU 14 Judges whether the notification ends or not (Step 309). If it ends, the MPU 14 returns to the Step 302 and waits for notification of ID number detection from the decoder 13. Which one among the speaker 20, LED 21, and vibrator 22 is used for notification is set at the EEPROM 16 in advance. This setting may be changed with the function switch 18C. Messages stored in the message memory areas of the RAM 17 can be, if necessary, displayed again on the LCD 15 by operating the function switches 18A and 18B. The messages are read and displayed in the order sorted by call distinction codes.

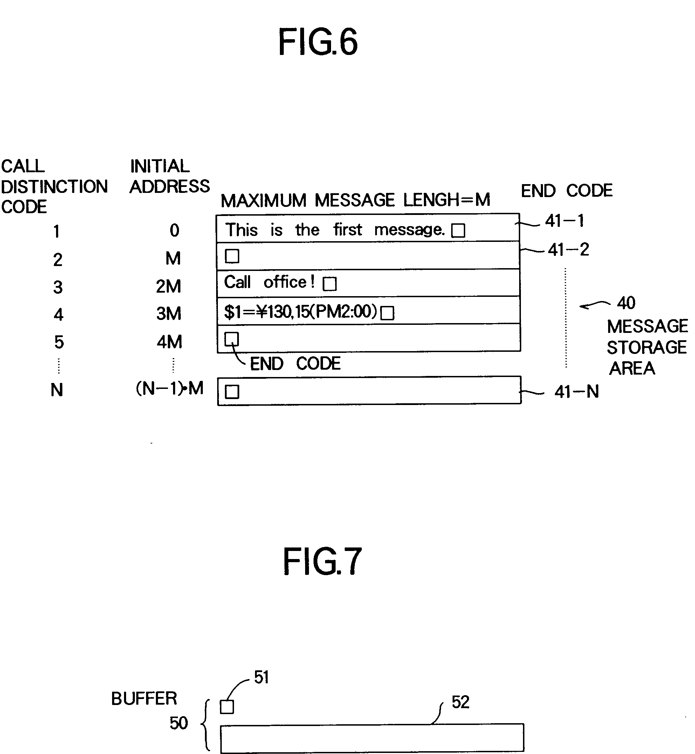

Now, storage and reading of received messages by the MPU 14, which characterizes the pager receiver of the present invention, are described in detail referring to Figs. 6 to 14.

First referring to Figs. 6 to 10, storing and reading of messages with the RAM 17 having message memory areas of fixed length.

Fig. 6 shows the configuration of message memory areas of the RAM 17 and Fig. 7 the configuration of the buffer area in the internal memory of the MPU 14 or in the external RAM 17 according to this method.

In Fig. 6, a message memory area 40 is provided with storage areas 41-1 to 41-N with fixed length of M letters for call distinction codes 1 to N. The initial addresses of these storage areas 41-1 to 41-N are O, M, 2M, ... and (N-1) M. Each of the storage areas 41-1 to 41-N can store one message only, which will be overwritten by a newly received message with the same call distinction code. In Fig. 7, a buffer 50 comprises an area 51 to store the call distinction code from the decoder 13 and the other area 52 for M letters to store the message.

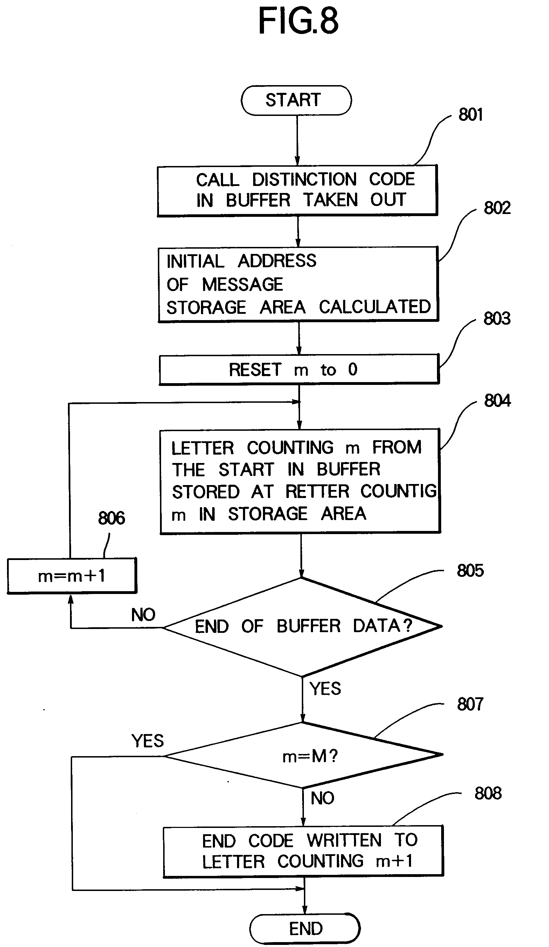

Storage processing for received messages is now described with reference to the flowchart of Fig. 8. Firstly, the call distinction code stored in the area 51 of the buffer 50 is taken out (Step 801). The initial address of the storage area (one of 41-1 to 41-N) in the message memory area 40 corresponding to the taken out call distinction code is determined by calculation (Step 802). When the call distinction code is n, the initial address can be obtained by (n-1) x M.

Assuming the number of letters contained in already stored part of the message to be m, m is reset to O first (Step 803).

The message in the area 52 of the buffer 50 is read out letter by letter and stored in the applicable storage area 41-1, 41-2 ... or 41-N from the initial address letter by letter (Step 804). The letter counting m from the initial address in the area 52 of the buffer 50 is stored to the address counting m in the applicable storage area 41-1, 41-2, ... or 41-N. This address is (n-1) x M + m. Then, it is judged whether the message in the area 52 of the buffer 50 ends or not (Step 805). If the message has not yet ended, the storage processing is repeated with setting m = m + 1 (Step 806).

Next, it is judged whether m equals M, i.e. the message has just M letters (Step 807). If m = M, which means that the message completely fills the applicable storage area 41-1, 41-2,... or 41-N, the processing ends. If m does not equal M, i.e. the message has less than M letters, the end code (For example, FFH, O4H etc. in ASCII code) is added at the letter counting m + 1 (Step 808). If there is no message corresponding to the taken out call distinction code, then the end code is written to the initial address of the applicable storage area 41-1, 41-2, ... or 41-N.

The storage processing described above causes the received messages stored in the message memory area 40 not in the order of reception as with conventional pager receivers but in the order of call distinction codes.

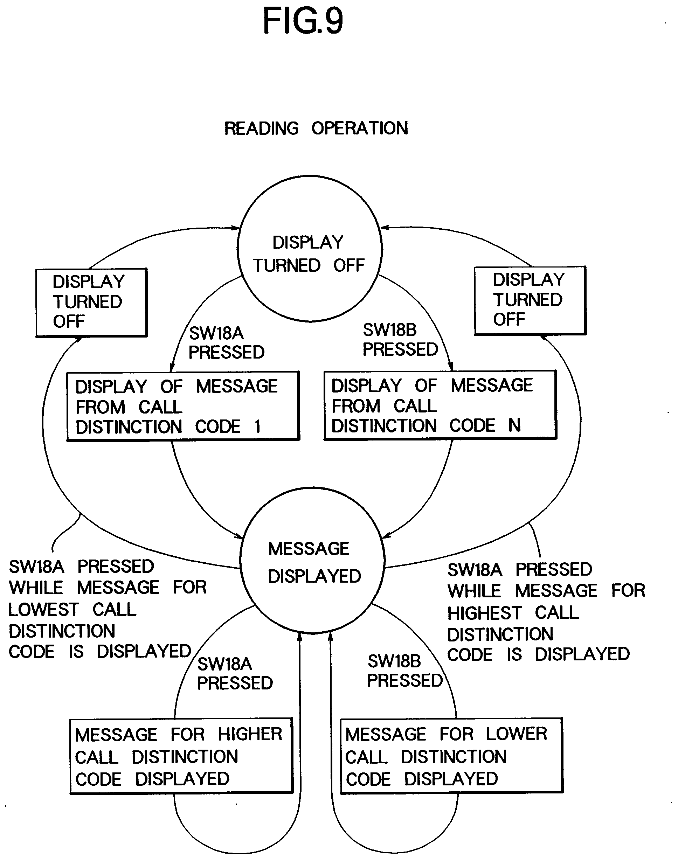

Now referring to the flowchart of Fig. 9, the processing to read a message stored as above and display it on the LCD 15 will be described.

Display on the LCD 15 is performed for each message. To read out messages, the function switches 18A and 18B are used. The function switch 18A is for reading in the ascending direction from the beginning of the message memory area 40 and the function switch 18B is for reading in the descending direction from the end of the message memory area 40.

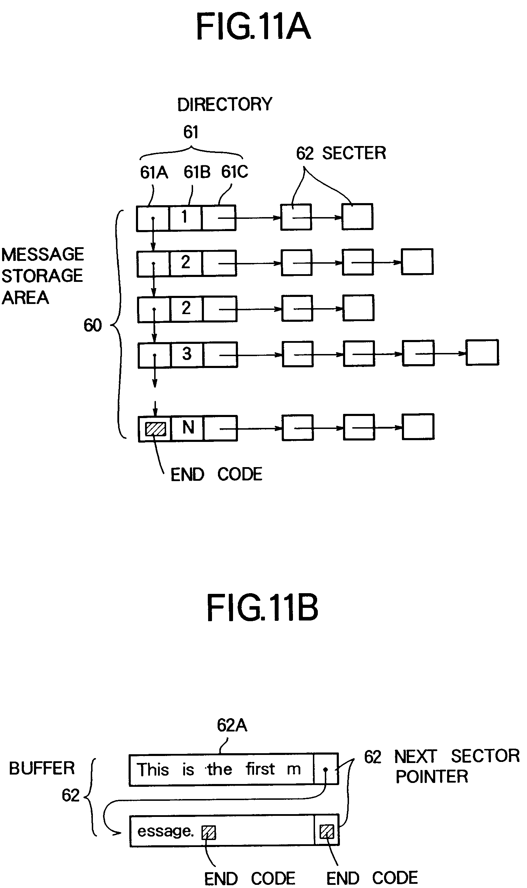

When the function switch 18A is operated with the LCD 15 turned off, the pager receiver searches the initial addresses of the storage areas 41-1 to 41-N of the message memory area 40 beginning with the lowest call distinction code (= 1) for a message. The firstly found message other than the end code is displayed on the LCD 15 with its call distinction code. Fig. 10 shows how the pager receiver displays the message in this case.

If the function switch 18A is further operated here, the pager receiver searches for another message in the ascending order of the call distinction codes and displays the next message with its call distinction code. If the switch 18A is operated while the message for the highest call distinction code is displayed, the display on the LCD 15 is turned off.

When the function switch 18B is operated with the LCD 15 turned off, the pager receiver searches the initial addresses of the storage areas 41-1 to 41-N of the message memory area 40 beginning with the highest call distinction code (= N) for a message. The firstly found message other than the end code is displayed on the LCD 15 with its call distinction code.

If the function switch 18B is further operated here, the pager receiver searches for another message in the descending order of the call distinction codes and displays the next message with its call distinction code. If the switch 18B is operated while the message for the lowest call distinction code is displayed, the display on the LCD 15 is turned off.

As described above, by reading out the messages sorted by call distinction codes and displaying them on the LCD 15 in the ascending or descending order of codes, the messages can be read effectively.

Figs. 11 to 14 show the storing and reading of messages with the RAM 17 having message memory areas of variable length.

The processing shown below is for a system where the message memory area has variable length and messages are sorted using the call distinction code as a key before storage. Figs. 11A and 11B show the configuration of the message memory areas in the RAM 17 according to this system. In Fig. 11A, the message storage area 60 comprises directories 61 to control every message and sectors 62 to store messages.

The directory 61 has a next directory pointer 61A to point the directory containing the next message, a storage area 61B to store the call distinction code, an initial sector pointer 61C to indicate the initial address of the applicable sector 62 storing the message. With this system, a plurality of messages can be stored for a single call distinction code. A message is stored in a sector 62, which is an area for a fixed number of letters. When one message has more letters than specified for the sector 62, another sector 62 is added for storage. This enables effective storing of variable length message in the message memory area 60 of the RAM 17. The sector 62 comprises, as shown in Fig. 11B, a message storing area 62A and a next sector pointer 62B.

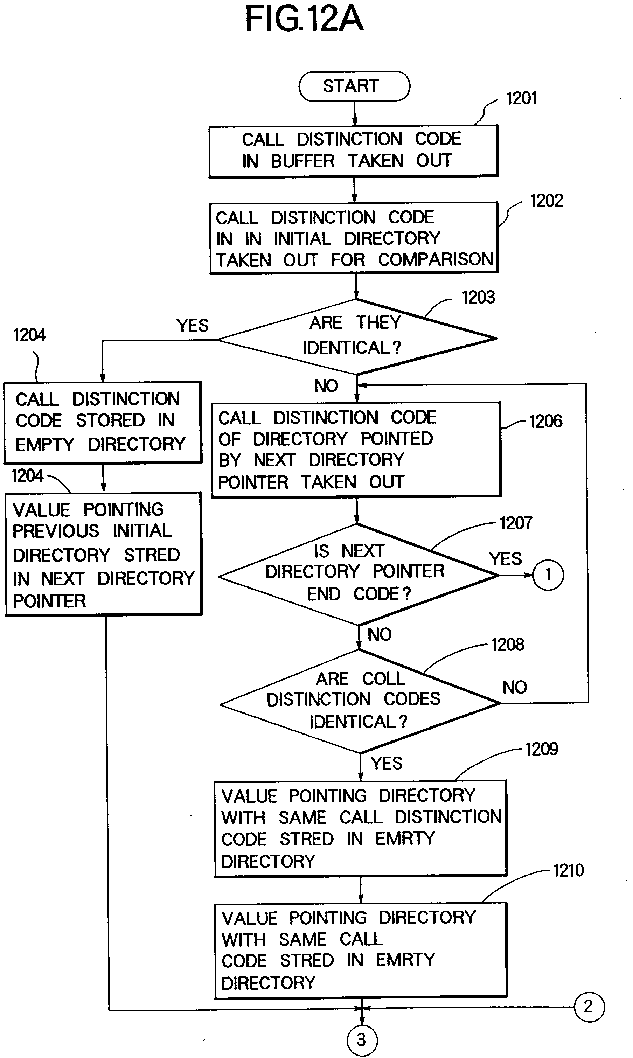

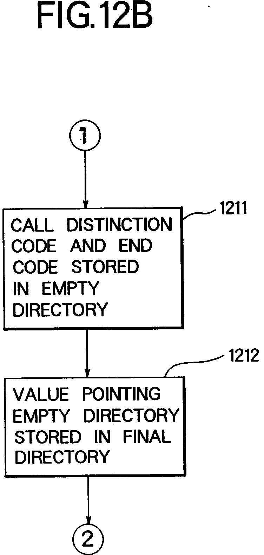

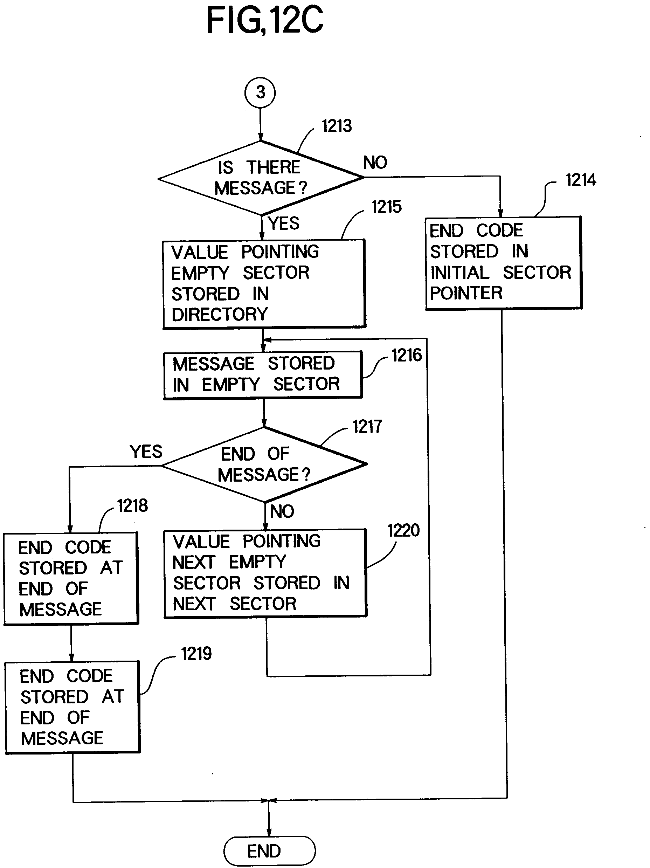

Referring now to the flowchart of Figs. 12A, 12B and 12C, storage processing of a received message is described below.

In Figs. 12A, 12B and 12C, a call distinction code stored in the buffer 50 is taken out first (Step 1201). Another code distinction code taken out from the initial directory 61 is compared to the one from the buffer 50 for judgment whether they are identical (Steps 1202 and 1203).

When the call distinction codes are identical, the call distinction code is stored in the storage area 61B of an empty directory 61 (Step 1204). The next directory pointer 61A of the directory stores the value to point the former initial directory 61 (Step 1205). This makes a new directory 61 inserted at the beginning.

If the call distinction codes are not identical in Step 1203, the call distinction code of the directory 61 pointed by the next directory pointer 61A of the initial directory 61 is taken out (Step 1206). It is also judged whether the next directory pointer 61A of the directory 61 stores the end code, i.e. it is the last directory (Step 1207). If there is no end code, the call distinction code is taken out and compared with the code from the buffer 50 (Step 1208).

When the call distinction codes are identical, the MPU 14 stores the call distinction code taken out of the buffer 50 in the storage area 61B of the empty directory 61 and the value pointing the directory 61 with the identical call distinction code as the next directory pointer 61A (Step 1209). This inserts a new directory 61. Also, the value pointing the directory 61 inserted as above is stored as the next directory pointer 61A of the previous directory 61 (Step 1210).

When the call distinction codes are not identical in the Step 1208, the MPU 14 returns to Step 1206 and repeats the procedure.

If an end code is recognized in Step 1207, the MPU 14 stores the call distinction code taken out of the buffer 50 in the storage are 61B of the empty directory 61 and an end code as its next directory pointer 61A (Step 1211). As the next directory pointer 61A of the final directory 61 with the end code, the value pointing the inserted empty directory 61 is stored (Step 1212).

Now proceeding to Fig. 12C, it is judged whether any message corresponding to the applicable call distinction code exists in the buffer 50 (Step 1213). If such a message is not found, the end code is stored as the initial sector pointer 61C of the inserted directory 61 and the processing ends (Step 1214).

When a message is found, the MPU 14 searches for an empty sector 62 and stores the value to point the empty sector 62 as the initial sector pointer 61C of the inserted directory 61 (Step 1215).

The message is stored to the storage area 62A of the empty sector 62 (Step 1216). Then, it is judged whether the message ends in the middle of the empty sector 62 (Step 1217). If the message ends in the middle of the empty sector 62, it means that the message is shorter than the sector 62. If the message ends in the middle of the empty sector 62, the MPU 14 stores an end code at the end of the message (Step 1218), and another end code to indicate the end of sectors as the next sector pointer 62B (Step 1219).

If the message does not end in the middle of the empty sector 62, i.e. the message is still left after the sector 62 is filled up, then the MPU 14 searches for another empty sector 62 and stores the value pointing the new empty sector 62 as the next sector pointer 62B of the sector 62 to which the message has been partially stored (Step 1220). The procedure from the Step 1216 is repeated until the message is completely stored.

As described above, the message memory area 60 of the RAM 17 stores messages sorted using the call distinction codes as a key.

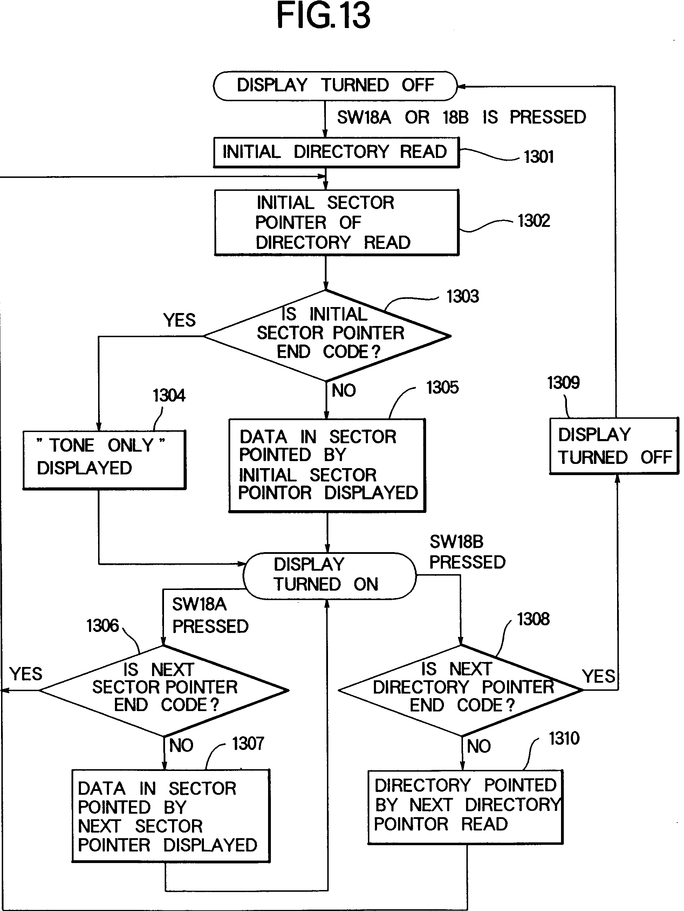

Now referring to the flowchart of Fig. 13 and Fig. 14, display processing of messages read from the message memory area 60 of the RAM 17 to the LCD 15 is described below.

Here, the function switches 18A and 18B used for reading messages are for display of the next screen of the message corresponding to the same call distinction code and for display of the initial screen of the message corresponding to the next call distinction code respectively. The number of letters displayed on a screen of the LCD 15 equals that for one sector 62.

When the function switch 18A or 18B is operated with the display turned off, the MPU 14 reads the directory 61 for the lowest call distinction code (initial directory) (Step 1301). Then the initial sector pointer 61C of the directory 61 is read (Step 1302). Whether the initial sector pointer 61C is the end code or not is judged (Step 1303). If it is the end code, indication "tone only" is displayed (Step 1304) and notification is given with one of the speaker 20, LED 21 or vibrator 22. If it is not the end code, the message in the sector 62 pointed by the initial sector pointer 61C is displayed (Step 1305). The call distinction code is displayed together with the message.

When the function switch 18A is operated with the display turned on, the MPU 14 judges whether the next sector pointer 62B of the displayed sector 62 stores the end code or not (Step 1306). If it stores the end code, i.e. the displayed sector 62 is the final sector, the MPU 14 returns to the Step 1302 and displays the initial sector 62 of the same message. If no end code is found, i.e. the displayed sector 62 is not the final sector, the message in the sector 62 pointed by the next sector pointer 62B is read out and displayed (Step 1307).

Thus, by operating the function switches 18, one message can be displayed with several screens, each of which has the length of the sector 62.

When the function switch 18B is operated with the display turned on, it is judged whether the next directory pointer 61A is the end code or not (Step 1308). If it is the end code, it means that there is no other message and the display is turned off (Step 1309). If it is not the end code, the directory 61 pointed by the next directory pointer 61A is read (Step 1310). Then, the processing from the Step 1302 is repeated.

Fig. 14 illustrates the LCD 15 with a part of a message displayed. Together with the message, the call distinction code is also displayed.

Obviously many modifications and variations of the present invention are possible. It is intended to cover in the appended claims all such modifications as fall within the true spirit and scope of the invention.

## Claims

1. A pager receiver comprising
   a message receiving means (13) for receiving messages sent to a plurality of ID numbers set to the receiver,
   a storage means (40,60) having a plurality of message storage areas to store received messages for different call distinction codes indicating the destination ID number of the received message,
   a storage processing means (14) for storing said received messages in said storage means (40,60) after sorting them by said call distinction codes,
   a reading means (14) for reading the messages stored in said storage means (40,60) in the ascending or descending order of said call distinction codes, and
   a display means (15) for displaying the message read out of said storage means (40,60).

2. A pager receiver of Claim 1 wherein said storage means (40) comprises message storage areas (41-1,41-2,...,41-N) of fixed length and said storage processing means (14) calculates the initial address of the message storage area of said storage means corresponding to the call distinction code and stores said message from the initial address of said message storage area.

3. A pager receiver of Claim 2 wherein said storage means (16) is provided with one message storage area (41-1,41-2,...,41-N) for each call distinction code and each area stores one message.

4. A pager receiver of Claim 2 wherein said storage processing means (14) stores an end code in the message storage area (41-1,41-2,...,41-N) of said storage means (40) corresponding to the call distinction code when there is no message for the call distinction code.

5. A pager receiver of Claim 1 provided with switches (18A,18B) to activate said reading means (14) to read messages in the ascending or descending order of call distinction codes.

6. A pager receiver of Claim 1 wherein the message storage area of said storage means (60) comprises an area of variable length provided with
   a directory (61) to store a call distinction code for each message and
   one or more sectors (62) to store the message corresponding to the applicable call distinction code, said storage processing means (14) storing the call distinction code of the received message in said directory (61) and the message in said sector or sectors (62) and sorting the messages by the call distinction codes in the directory (61).

7. A pager receiver of Claim 6 wherein the directory (61) of said message storage area (60) has a pointer (61A) to point the directory corresponding to the next message, said sector (62) having a pointer (62B) pointing the subsequent sector.

# FIG.1

EP 0 498 660 A1

# FIG.2

MESSAGE

This is the first m

1

CALL DISTINCTION
CODE INDICATION

18A    18B    18C

15

30

# FIG.10

MESSAGE

This is the first m

1

CALL DISTINCTION
CODE INDICATION

18A    18B    18C

15

30

# FIG.14

MESSAGE

This is the first m

1

CALL DISTINCTION
CODE INDICATION

18A    18B    18C

15

30

# FIG.3

```
            ( START )
                │
                ▼
    ┌──────────────────────────┐  ── 301
    │  CALL  NUMBER  SETTING   │
    └──────────────────────────┘
                │
                ▼
         ◇ CALL  NUMBER         ◇  ── 302
  NO ◄── ◇ DETECTION  NOTIFIED? ◇
         ◇                      ◇
                │ YES
                ▼
    ┌──────────────────────────┐  ── 303
    │  CALL  DETECTION  CODE    │
    │  STORED  IN  BUFFER       │
    └──────────────────────────┘
                │
                ▼
305 ──                ◇ MESSAGE  ◇  ── 304
  ┌──────────┐ YES ◄── ◇          ◇
  │ MESSAGE  │        ◇ FOLLOW ?  ◇
  │ STORED IN│
  │ BUFFER   │            │ NO
  └──────────┘            ▼
            ┌──────────────────────────┐  ── 306
            │  MPU  CLOCK  PULSE24      │
            │  ACTIVATED               │
            └──────────────────────────┘
                        │                  ── 307
                        ▼
            ┌──────────────────────────┐
            │  MESSAGE  STORED  IN      │
            │  MESSAGE  MEMORY  AREA    │
            └──────────────────────────┘
                        │                  ── 308
                        ▼
            ┌──────────────────────────┐
            │  MESSAGE  DISPLAYED  ON   │
            │  SPEAKER,  LED  AND       │
            │  VIBRATOR  ACTIVATED      │
            └──────────────────────────┘
                        │
                        ▼
                ◇ END  OF         ◇  ── 309
       YES ◄── ◇                 ◇
                ◇ NOTIFICATION ?  ◇
                        │ NO
```

# FIG.4

CALL SIGNAL  MESSAGE SIGNAL  MESSAGE SIGNAL  MESSAGE SIGNAL  MESSAGE SIGNAL  CALL SIGNAL

PREAMBLE

SC    A    SC    SC    SC

(A)

(B)

(C)

(D)

EP 0 498 660 A1

# FIG.5

(A)

SYNCHRONIZATION SIGNAL

SYNCHRONIZATION SIGNAL

MESSAGE SIGNAL

SYNCHRONIZATION SIGNAL

SYNCHRONIZATION SIGNAL

PREAMBLE SIGNAL

CALL SIGNAL

BATCH

(B)

GROUP1　　GROUP2

GROUP7　　GROUP8

| SC | CW1 | CW2 | CW3 | |

| CW12 | CW13 | CW14 | CW15 | CW16 |

CODE　WORD

(C)

PARITY

| DATA　BIT(21 BITS) | CHECK　BIT(10 BITS) |

MSB

LSB

# FIG.6

CALL
DISTINCTION    INITIAL
CODE           ADDRESS      MAXIMUM MESSAGE LENGH=M                    END CODE

| | | |
|---|---|---|
| 1 | 0 | This is the first message. □ | ~ 41-1 |
| 2 | M | □ | ~ 41-2 |
| 3 | 2M | Call office ! □ | |
| 4 | 3M | $1=¥130,15(PM2:00)□ | ~ 40 |
| 5 | 4M | □ | MESSAGE STORAGE AREA |

END CODE

| N | (N-1)·M | □ | ~ 41-N |

# FIG.7

BUFFER
50 {   □  51
       ⌐————————————————————⌐ 52

# FIG.8

START — 801

CALL DISTINCTION CODE
IN BUFFER TAKEN OUT — 802

INITIAL ADDRESS
OF MESSAGE
STORAGE AREA CALCULATED — 803

RESET m to 0 — 804

LETTER COUNTING m FROM
THE START IN BUFFER
STORED AT RETTER COUNTIG
m IN STORAGE AREA

806
m=m+1

NO — END OF BUFFER DATA? — 805

YES

YES — m=M? — 807

NO — 808

END CODE WRITTEN TO
LETTER COUNTING m+1

END

# FIG.9

READING OPERATION

# FIG.11A

DIRECTORY

61

61A 61B 61C

62 SECTER

MESSAGE
STORAGE
AREA

60

END CODE

# FIG.11B

62A

BUFFER

62

62 NEXT SECTOR
POINTER

This is the first m

essage.

END CODE      END CODE

16

# FIG.12A

```
            ┌─────────────┐
            │    START    │
            └─────────────┘
                   │
                   ▼
      ┌──────────────────────────┐  1201
      │  CALL  DISTINCTION  CODE │
      │  IN  BUFFER  TAKEN  OUT  │
      └──────────────────────────┘
                   │
                   ▼
      ┌──────────────────────────────┐  1202
      │  CALL  DISTINCTION  CODE     │
      │  IN  IN  INITIAL  DIRECTORY  │
      │  TAKEN  OUT  FOR  COMPARISON │
      └──────────────────────────────┘
                   │
                   ▼
         1203
        ◇ ARE  THEY
          IDENTICAL?  ◇
```

YES ── 1204

1204

CALL DISTINCTION CODE STORED IN EMPTY DIRECTORY

1204

VALUE POINTING PREVIOUS INITIAL DIRECTORY STRED IN NEXT DIRECTORY POINTER

NO

CALL DISTINCTION CODE OF DIRECTORY POINTED BY NEXT DIRECTORY POINTER TAKEN OUT — 1206

1207

IS NEXT DIRECTORY POINTER END CODE?   YES ─ (1)

NO

1208

ARE COLL DISTINCTION CODES IDENTICAL?   NO

YES — 1209

VALUE POINTING DIRECTORY WITH SAME CALL DISTINCTION CODE STRED IN EMRTY DIRECTORY

1210

VALUE POINTING DIRECTORY WITH SAME CALL CODE STRED IN EMRTY DIRECTORY

(2)

(3)

17

# FIG.12B

1211 — CALL DISTINCTION CODE AND END CODE STORED IN EMPTY DIRECTORY

1212 — VALUE POINTING EMPTY DIRECTORY STORED IN FINAL DIRECTORY

# FIG,12C

③

1213

◇ IS THERE MESSAGE ? ◇ — NO →

1214
END CODE STORED IN INITIAL SECTOR POINTER

YES

1215
VALUE POINTING EMPTY SECTOR STORED IN DIRECTORY

1216
MESSAGE STORED IN EMPTY SECTOR

1217
YES ← ◇ END OF MESSAGE ? ◇

NO

1218
END CODE STORED AT END OF MESSAGE

1220
VALUE POINTING NEXT EMPTY SECTOR STORED IN NEXT SECTOR

1219
END CODE STORED AT END OF MESSAGE

( END )

# FIG.13

```
                    ┌─────────────────────────┐
                 ┌─▶│   DISPLAY  TURNED  OFF   │◀──────────────┐
                 │  └─────────────────────────┘                │
                 │         │ SW18A  OR  18B  IS  PRESSED        │
                 │         ▼                                    │
                 │  ┌────────────────────────┐                 │
                 │  │ INITIAL  DIRECTORY  READ│──── 1301        │
                 │  └────────────────────────┘                 │
                 │         ▼                                    │
        ─────────────▶┌──────────────────┐                     │
                      │ INITIAL  SECTOR   │                     │
                      │ POINTER  OF       │──── 1302            │
                      │ DIRECTORY  READ   │                     │
                      └──────────────────┘                     │
                            │                                   │
                            ▼                                   │
                  YES      ╱ 1303 ╲                 1309        │
              ┌───────────◇ IS  INITIAL ◇                       │
              │            ╲ SECTOR POINTER ╱                   │
              │             ╲ END  CODE? ╱                      │
              │              ╲         ╱                        │
              │               │ NO    1305          ┌──────────┐│
       1304   │               ▼                      │ DISPLAY  ││
              ▼       ┌──────────────────┐           │ TURNED   ││
      ┌───────────┐   │ DATA  IN  SECTOR │           │ OFF      ││
      │ "TONE ONLY"│  │ POINTED  BY      │           └──────────┘│
      │ DISPLAYED  │  │ INITIAL  SECTOR  │                ▲      │
      └───────────┘   │ POINTOR DISPLAYED│                │      │
              │       └──────────────────┘                │      │
              │               │                           │      │
              │               ▼         SW18B             │      │
              │        ┌──────────┐     PRESSED           │      │
              └───────▶│ DISPLAY  │─────────────┐         │      │
                       │ TURNED ON│             │         │      │
                       └──────────┘             │         │      │
              SW18A        ▲                    │         │      │
              PRESSED      │                    │         │      │
      1306   ╱   ╲         │              1308 ╱    ╲     │      │
          ╱ IS  NEXT ╲     │                ╱ IS  NEXT ╲  │ YES  │
  YES  ◇ SECTOR POINTER◇   │            ◇ DIRECTORY POINTER◇─────┘
  ┌────╲  END  CODE? ╱     │                ╲ END  CODE? ╱
  │      ╲         ╱       │                  ╲        ╱
  │       │ NO  1307       │                   │ NO   1310
  │       ▼                │                   ▼
  │ ┌──────────────┐       │            ┌──────────────┐
  │ │ DATA  IN SECTOR│     │            │ DIRECTORY POINTED│
  │ │ POINTED  BY    │     │            │ BY NEXT DIRECTORY│
  │ │ NEXT  SECTOR   │     │            │ POINTOR  READ    │
  │ │ POINTER DISPLAYED│   │            └──────────────┘
  │ └──────────────┘       │                   │
  │       │                │                   │
  └───────┴────────────────┴───────────────────┘
```

EP 0 498 660 A1

European Patent Office

**EUROPEAN SEARCH REPORT**

Application Number

EP 92 30 1039

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-9 013 213 (BLICK COMMUNICATIONS LTD., ET AL.)<br>* page 5, line 21 - page 6, line 22 *<br>--- | 1-3 | G08B5/22 |
| A | EP-A-0 393 793 (ERICSSON PAGING SYSTEMS B.V.)<br>* abstract; figures 1-3 *<br>* column 3, line 50 - column 4, line 15 *<br>--- | 1,2 | |
| A | WO-A-9 011 655 (MOTOROLA,INC.)<br>* abstract; figures 1,2 *<br>* page 5, line 28 - page 6, line 11 *<br>--- | 1 | |
| A | WO-A-8 809 104 (NEWSPAGER CORPORATION OF AMERICA )<br>* the whole document *<br><br>----- | | |
| | | | TECHNICAL FIELDS SEARCHED (Int. Cl.5)<br><br>G08B<br>H04Q |

The present search report has been drawn up for all claims

| Place of search | Date of completion of the search | Examiner |
|---|---|---|
| BERLIN | 15 MAY 1992 | DANIELIDIS S. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................
& : member of the same patent family, corresponding
   document

EPO FORM 1503 03.82 (P0401)

21